# EUROPEAN PATENT APPLICATION

(11) **EP 4 228 251 A1**
(43) Date of publication of application: **16.08.2023**
(21) Application number: 21879769.4
(22) Date of filing: 31.08.2021
(51) Int. Cl.: H04N 7/18, B60R 1/00, E02F 9/26

(54) **WORKING VEHICLE**

(30) Priority: 12.10.2020 JP 2020171623
(71) Applicant: Yanmar Holdings Co., Ltd., Osaka-shi, Osaka, 530-0013 (JP)
(72) Inventor: DANGUCHI, Masashi, Chikugo-shi, Fukuoka 833-0055 (JP); SUZUKI, Shogo, Osaka-shi, Osaka 530-0013 (JP)
(74) Representative: Novagraaf International SA
(86) International application number: PCT/JP2021/031939
(87) International publication number: WO 2022/080027

(57) **Abstract**

This working vehicle includes: a monitor image acquisition unit for acquiring an image of surroundings of a working vehicle as a monitor image; an enlarged image generation unit for enlarging the monitor image to generate an enlarged image; a display unit for displaying at least one of the monitor image and the enlarged image; a single image switching-indication input unit for receiving an indication to switch a displayed image on the display unit between the monitor image and the enlarged image; and a display control unit for displaying the monitor image or enlarged image on the display unit according to the indication received by the single image switching-indication input unit.

## Description

### TECHNICAL FIELD

The present invention relates to a work vehicle.

### BACKGROUND ART

Conventionally, various monitoring systems have been proposed to monitor a state around a work vehicle such as an excavator. For example, Patent Literature 1 discloses a system configured to capture images of a state around the excavator by multiple cameras, generate an overhead image from the captured images, and display it on a display unit. The display unit has a number of button switches. When the operator presses any of button switches, a camera image at a position corresponding to the button switch is enlarged and displayed in the overhead image. By changing the display of the camera images and the overhead image, the operator can properly obtain the information necessary to monitor the state around it.

### CITATION LIST

### Patent Literature

Patent Literature 1: Japanese Patent Laid-open Publication No. 2012-74929

### DISCLOSURE OF INVENTION

### PROBLEMS TO BE SOLVED BY THE INVENTION

However, the configuration of the Patent Literature 1 has multiple button switches to instruct a change of an image to be displayed. Therefore, the operator needs to know in advance which button switch is to be pressed in order to change the desired image to be displayed. This made it difficult for the operator to easily give the system instructions to change the images to be displayed by easy and intuitive operations.

The present invention has been made to solve the above mentioned problems, and an object is to provide a work vehicle capable of easily giving the system instructions to change the images to be displayed by easy and intuitive operations.

### MEANS FOR SOLVING THE PROBLEMS

According to an aspect of the present invention, a work vehicle is provided, which includes: a monitor image obtaining unit to obtain an image around the work vehicle as a monitor image; an enlarged image generation unit to enlarge the monitor image to generate an enlarged image; a display unit to display the monitor image or the enlarged image; a single image changing instruction input unit to receive an instruction to change an image to be displayed on the display unit between the monitor image and the enlarged image; and a display control unit to cause the display unit to display the monitor image or the enlarged image based on the instruction received at the single image changing instruction input unit.

### EFFECT OF THE INVENTION

According to the above mentioned configuration of the work vehicle, it is possible for the operator to easily give the system instructions to change the images to be displayed by easy and intuitive operations.

### BRIEF DESCRIPTION OF DRAWINGS

FIG. 1 is a side view illustrating a schematic configuration of a hydraulic excavator which is an example of a work vehicle according to an embodiment of the present invention.
FIG. 2 is a block diagram illustrating a configuration of a main part of the hydraulic excavator.
FIG. 3 is an explanatory diagram illustrating an example of a display screen of a display unit of the hydraulic excavator.
FIG. 4 is an explanatory diagram illustrating a display screen of a display unit in the first display mode.
FIG. 5 is an explanatory diagram illustrating a display screen of a display unit in the second display mode.
FIG. 6 is an explanatory diagram illustrating a display screen of a display unit in the third display mode.
FIG. 7 is an explanatory diagram illustrating a display screen of a display unit in the fourth display mode.
FIG. 8 is an explanatory diagram illustrating a display screen of a display unit in the fifth display mode.
FIG. 9 is an explanatory diagram illustrating a display screen of a display unit in the sixth display mode.
FIG. 10 is an explanatory diagram illustrating an example of transitions among multiple display modes.
FIG. 11 is an explanatory diagram illustrating another example of the display screen of the display unit.
FIG. 12 is an explanatory diagram illustrating other example of the display screen of the display unit.

### DESCRIPTION OF EMBODIMENTS

Now, an embodiment of the present invention is described below with reference to the drawings.

### 1. Work Vehicle

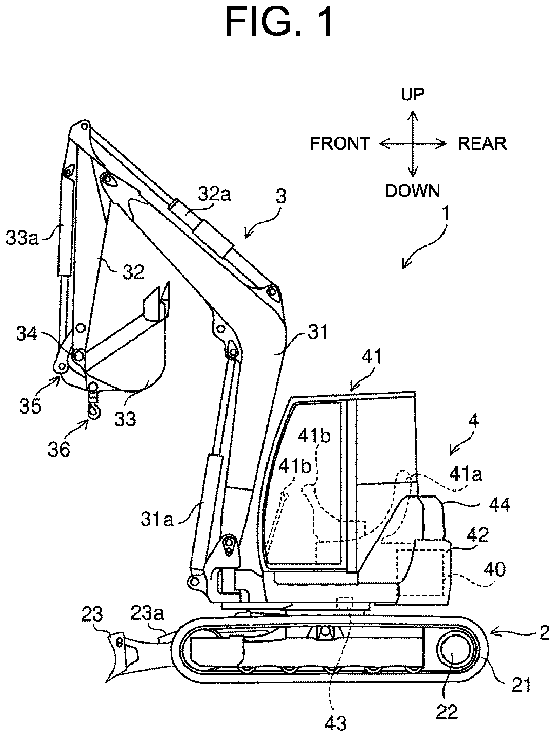

FIG. 1 is a side view showing a schematic configuration of a hydraulic excavator 1 which is an example of a work vehicle according to the present embodiment. The hydraulic excavator 1 includes a lower traveling body 2, a work machine 3, and an upper revolving body 4.

Here, in FIG. 1, directions are defined as follows. First, the direction in which the lower traveling body 2 travels straight ahead is defined as a front-rear direction, one and other sides thereof are defined as "front" and "rear", respectively. In FIG. 1, a blade 23 side with respect to a traveling motor 22 is exemplarily shown as "front". In addition, a horizontal direction perpendicular to the front-rear direction is defined as a left-right direction. In this instance, as viewed from an operator sitting at an operator's seat 41a, left and right sides are defined as "left" and "right", respectively. Furthermore, a direction of gravity perpendicular to the front-rear and left-right directions is defined as a vertical direction, and upstream and downstream sides of the direction of gravity are defined as "up" and "down", respectively.

The lower traveling body 2 is driven by power from an engine 40 to cause the hydraulic excavator 1 to travel. The lower traveling body 2 is equipped with a pair of crawlers 21 on each side and a pair of traveling motors 22 on each side. Each of the traveling motors 22 is a hydraulic motor. The traveling motors 22 on each side drive the crawlers 21 on each side, respectively, and it allows the hydraulic excavator 1 to move forward and backward. The lower traveling body 2 is provided with the blade 23 for performing ground leveling work, and a blade cylinder 23a. The blade cylinder 23a is a hydraulic cylinder to rotate the blade 23 in the vertical direction.

The work machine 3 is driven by power from an engine 40 and performs excavation work to dig out earth and sand. The work machine 3 has a boom 31, an arm 32, and a bucket 33. The boom 31, arm 32, and bucket 33 can be driven independently to perform digging operations.

The boom 31 is rotated by a boom cylinder 31a. A base end portion of the boom cylinder 31a is supported by a front portion of the upper revolving body 4 and the boom cylinder can move in a freely extendable manner. The arm 32 is rotated by an arm cylinder 32a. A base end portion of the arm cylinder 32a is supported by a tip of the boom 31 and the arm cylinder can move in a freely extendable manner. The bucket 33 is rotated by a bucket cylinder 33a. A base end portion of the bucket cylinder 33a is supported by a tip of the arm 32 and the bucket cylinder can move in a freely extendable manner. Each of the boom cylinder 31a, the arm cylinder 32a, and the bucket cylinder 33a is composed of a hydraulic cylinder.

The bucket 33 is a container-like component with claws for digging, located at the tip of the work machine 3. The bucket 33 is pivotably attached to the tip of the arm 32 via a pin 34. In addition, the bucket 33 is connected to the bucket cylinder 33a via a link mechanism 35.

A hook 36 for crane work is attached to the tip of arm 32. The hook 36 is a hook-shaped member for the crane work and is pivotably attached to the link mechanism 35. Here, the crane work refers to lifting work in which an object to be worked is lifted up or down. The hook 36 is pivotably supported by the shaft of the link mechanism 35 as a turning fulcrum, and can change its posture between an extending state (see FIG. 1) where the hook extends from the bucket 33 and a retracting state (not shown) where the hook retracts to the bucket 33 side. For example, when performing excavation work with the bucket 33, the hook 36 comes to be in the retracting state. On the other hand, when performing the crane work with the hook 36, the hook 36 comes to be in the extending state.

The upper revolving body 4 is configured to be revolvable relative to the lower traveling body 2 via a swing bearing (not shown). An operation section 41, a revolving table 42, a revolving motor 43, an engine room 44, etc. are arranged in the upper revolving body 4. The upper revolving body 4 is driven by the revolving motor 43 which is a hydraulic motor to revolve via the swing bearing. At the rear portion of the upper revolving body 4, there are arranged a plurality of hydraulic pumps (not shown), as well as the engine 40 to provide power to various parts.

Each hydraulic pump supplies hydraulic oil (pressure oil) to a hydraulic motor (e.g., left and right traveling motors 22, revolving motors 43) and a hydraulic cylinder (e.g., blade cylinder 23a, boom cylinder 31a, arm cylinder 32a, bucket cylinder 33a). Hydraulic motors and hydraulic cylinders to which hydraulic oil is supplied from any hydraulic pump to drive them are collectively called hydraulic actuators.

An operator seat 41a is located in an operation unit 41 on which an operator gets. A manipulation unit 41b is located around the operator seat 41a (especially in the front, left, and right sides thereof).

The manipulation unit 41b is composed of operation lever, switches, buttons, etc. to drive the hydraulic actuator. Sitting on the operator's seat 41a and operating the manipulation unit 41b, the operator can actuate the hydraulic actuator AC. This allows the lower traveling body 2 to travel, the blade 23 to perform a ground leveling work, the work machine 3 to perform an excavation work and crane work, and the upper revolving body 4 to revolve, etc.

The manipulation unit 41b includes a cutoff lever. The cutoff lever is provided in the vicinity of the operator's seat 41a in a vertically rotatable manner. When the operator presses down the cutoff lever, a cutoff switch (not shown) is turned ON, so that the manipulation unit 41b becomes a state where it can be operated to drive the predetermined hydraulic actuator (enabled state). On the other hand, when the operator pulls up the cutoff lever, the cutoff switch is turned OFF, so that the manipulation unit 41b becomes a state where even if it is operated, the hydraulic actuator cannot be driven (disabled state). When getting off the operation section 41, the operator pulls up the cutoff lever to disable the hydraulic actuator, and then leaves the operator's seat 41a.

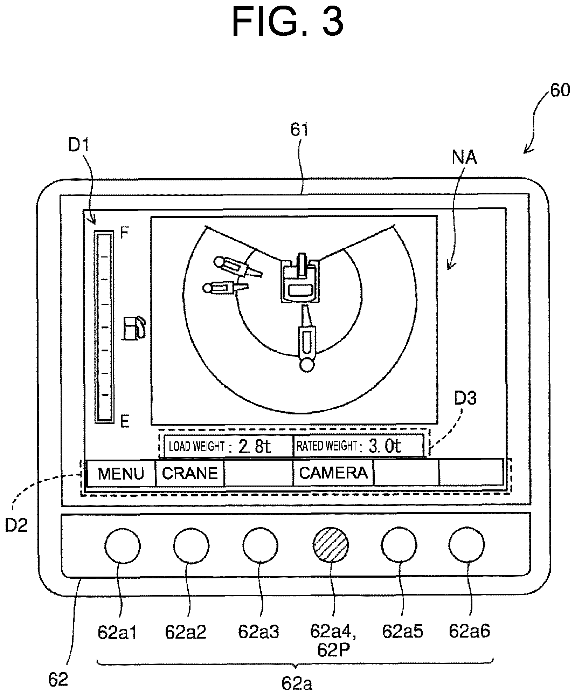

The hydraulic excavator 1 has a normal mode and a crane mode as operation modes. The normal mode is an operation mode in which operations or works such as traveling (drive of the lower traveling body 2), revolving (drive of the upper revolving body 4), and digging (drive of the work machine 3) can be performed. In the normal mode, the operator can manipulate the manipulation unit 41b so as to cause the hydraulic excavator 1 to perform traveling, turning, digging, etc. On the other hand, the crane mode is an operation mode in which crane work, where an object to be worked is suspended by the hook 36, can be performed. The operator manipulates an input 62 (see FIG. 3) described below to set the crane mode and then manipulates the manipulation unit 41b to cause the hydraulic excavator 1 to perform the crane work.

### 2. Configuration of Main Part of Hydraulic Excavator

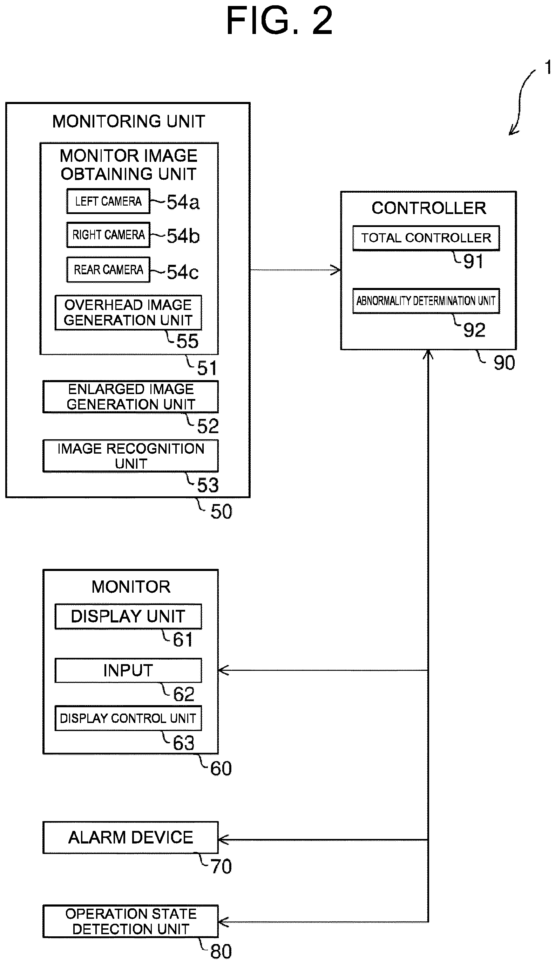

FIG. 2 schematically shows a configuration of a main part of the hydraulic excavator 1. The hydraulic excavator 1 further includes a monitoring unit 50, a monitor 60, an alarm device 70, an operation state detection unit 80, and a controller 90.

### 2-1. Monitoring Unit

The monitoring unit 50 detects whether or not an obstacle is present around the hydraulic excavator 1, whereby to monitor a state therearound. The obstacle may include an object to be monitored, such as a human, an object, or an animal. Namely, the hydraulic excavator 1 is provided with the monitoring unit 50 to monitor the state around the hydraulic excavator 1. The monitoring unit 50 has a monitor image obtaining unit 51, an enlarged image generation unit 52, and an image recognition unit 53.

### 2-1-1. Monitor Image Obtaining Unit

The monitor image obtaining unit 51 obtains an image of a state around the hydraulic excavator 1 as a monitor image NA (see FIG. 3, etc.). The monitor image obtaining unit 51 has a left camera 54a, a right camera 54b, a rear camera 54c, and an overhead image generation unit 55.

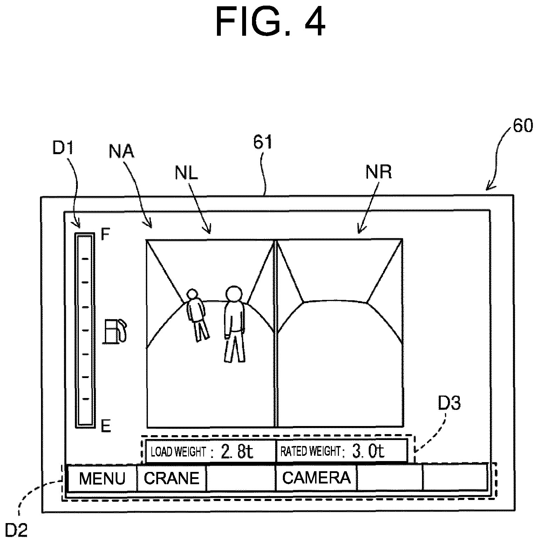

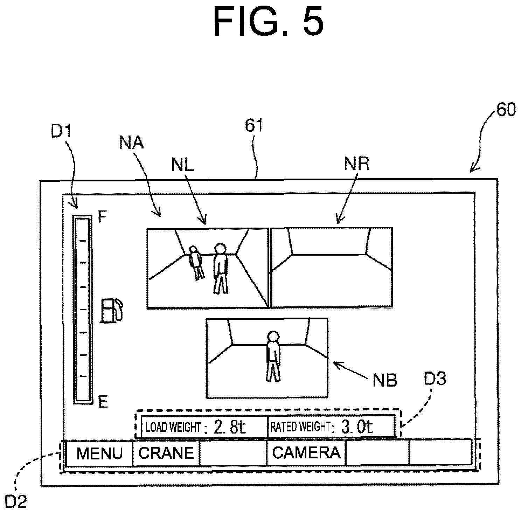

The left camera 54a captures an image of a left side of the hydraulic excavator 1 to obtain a left side image NL (see FIG. 4). The right camera 54b captures an image of a right side of the hydraulic excavator 1 to obtain a right side image NR (see FIG. 4). The rear camera 54c captures an image of a rear side of the hydraulic excavator 1 to obtain a rear side image NB (see FIG. 5). The monitor image NA includes the left side image NL, right side image NR and rear side image NB. That is, the monitor image obtaining unit 51 includes the left camera 54a, right camera 54b, and rear camera 54c which capture images of the left side, right side, and rear side of the hydraulic excavator 1, respectively. The monitor image NA includes the left side image NL, right side image NR, and rear side image NB which are obtained by the left camera 54a, right camera 54b, and rear camera 54c, respectively. The monitor image NA is a moving image, for example, but it may be a still image captured at a predetermined frame cycle.

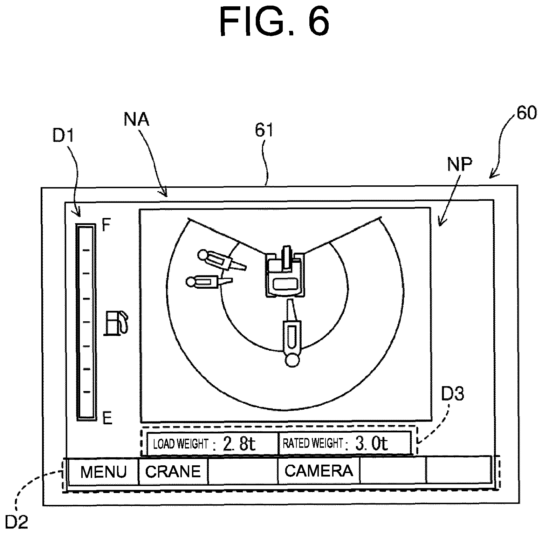

The overhead image generation unit 55 performs image processing on the left side image NL, right side image MR, and rear side image NB to compose and generate an image looking down at the hydraulic excavator 1 from above, that is, an overhead image NP (see FIG. 6). The monitor image NA includes the overhead image NP. Namely, the monitor image obtaining unit 51 includes the overhead image generation unit 55 to compose the left side image NL, right side image NR, and rear side image NB to generate the overhead image NP. Then the monitor image NA includes the overhead image NP. The overhead image generation unit 55 consist of a central processing unit called a CPU (Central Processing Unit) or a computing device such as a GPU (Graphics Processing Unit), for example. The overhead image NP may be an animation image.

### 2-1-2. Enlarged Image Generation Unit

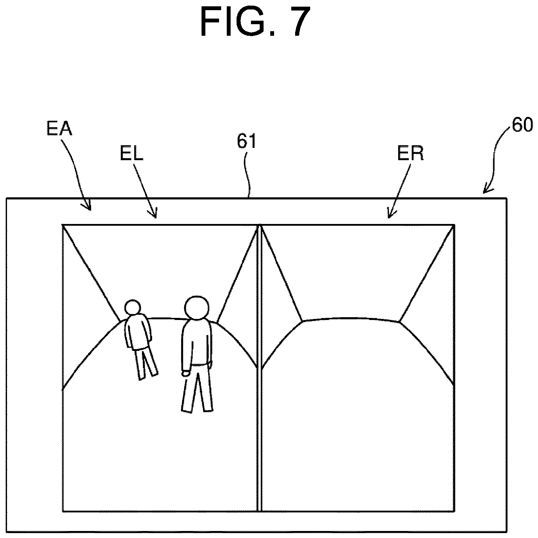

The enlarged image generation unit 52 enlarges by means of the image processing the monitor image NA (left side image NL, right side image NR, rear side image NB, overhead image NP) obtained by the monitor image obtaining unit 51 to generate an enlarged image EA (see FIG. 7, etc.). The magnification rate of the image can be set arbitrarily. Similar to the overhead image generation unit 55, the enlarged image generation unit 52 also consists of a CPU or GPU, for example. Namely, the hydraulic excavator 1 according to the present embodiment is provided with the monitor image obtaining unit 51 to obtain an image of the state around the hydraulic excavator 1 of being a work vehicle as the monitor image NA, and the enlarged image generation unit 52 to enlarge the monitor image NA to generate the enlarged image EA.

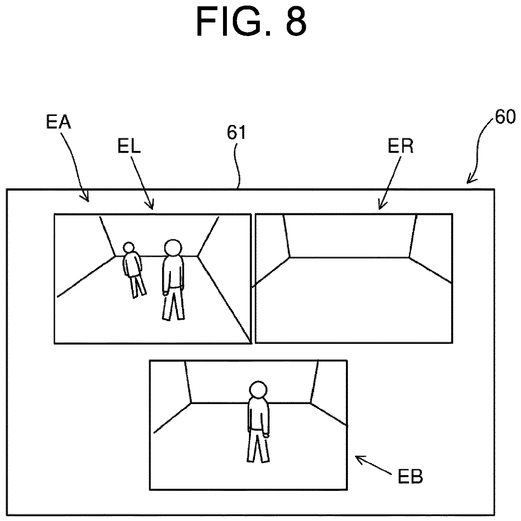

The enlarged image generation unit 52 enlarges the left side image NL of the monitor image NA to generate the enlarged left side image EL (see FIG. 7), enlarges the right side image NR to generate the enlarged right side image ER (see FIG. 7), and enlarges the rear side image NB to generate the enlarged rear side image EB (see FIG. 8). Therefore, the enlarged image EA generated by the enlarged image generation unit 52 includes the enlarged left side image EL in which the left side image NL is enlarged, the enlarged right side image ER in which the right side image NR is enlarged, and the enlarged rear side image EB in which the rear side image NB is enlarged.

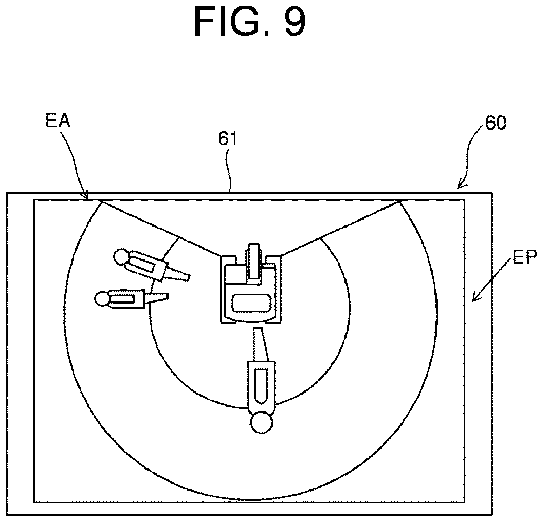

The enlarged image generation unit 52 also generates an enlarged overhead image EP (see FIG. 9). The enlarged overhead image EP is an image in which the overhead image NP generated by the overhead image generation unit 55 is enlarged by means of the image processing and is included in the above mentioned enlarged image EA. Namely, the enlarged image generation unit 52 enlarges the overhead image NP generated by the overhead image generation unit 55 to generate the enlarged overhead image EP. Then the enlarged image EA includes the enlarged overhead image EP.

### 2-1-3. Image Recognition Unit

The image recognition unit 53 performs image recognition processing on the monitor image as an input, thereby to detect whether an object in the monitor image is an obstacle and a type of the obstacle (human/object/animal) and detect objects invading into a monitoring area. Namely, the hydraulic excavator 1 has the image recognition unit 53 to perform image recognition processing on the monitor image to detect whether or not an obstacle is present around the hydraulic excavator 1. The image recognition unit 53 is composed of a GPU or the like. The enlarged image generation unit 52, image recognition unit 53, and overhead image generation unit 55 mentioned above may be configured as a single GPU.

The monitoring unit 50 may be configured to detect obstacles using an obstacle sensor. As the obstacle sensor, any known distance measuring device capable of acquiring distance information of the obstacle can be applied. For example, an ultrasonic radar using ultrasonic waves, a millimeter wave radar using millimeter wave band radio waves, a LIDER that measures a scattered light in response to laser radiation thereby to calculate a distance, and a stereo camera which is provided with plural cameras and measures the distance from a taken image to an object can be used as the obstacle sensor.

### 2-2. Monitor

The monitor 60 is located in the vicinity of (e.g., diagonally forward of) the operator's seat 41a shown in FIG. 1 and displays various types of information to provide necessary information to the operator sitting on the operator's seat 41a. The monitor 60 has a display unit 61, an input 62, and a display control unit 63.

### 2-2-1. Display Unit

FIG. 3 is a front view of the monitor 60. The display unit 61 of the monitor 60 consists of a liquid crystal display device to display various types of information, for example. For example, the display unit 61 displays the monitor image NA obtained by the monitor image obtaining unit 51 or an enlarged image EA generated by the enlarged image generation unit 52. Namely, the hydraulic excavator 1 according to the present embodiment is provided with the display unit 61 to display either the monitor image NA or the enlarged image EA. The display unit 61 displays the image when the ignition key of the engine 40 (see FIG. 1) is being turned on and after the cutoff switch detects that the cutoff lever is pressed down, i.e., the disabled state of the manipulation unit 41b is canceled.

The display unit 61 further displays the operation state information D1, menu information D2, and crane information D3. The operation state information D1 is information about an operation state of the hydraulic excavator 1. In FIG. 3, information about the amount of residual fuel of the hydraulic excavator 1 is shown as the operation state information D1, for example. The operation state information D1 is not limited to the information about the amount of residual fuel described above, but may also include information on an operating duration time of the hydraulic excavator 1, remaining capacity of a battery, etc.

The menu information D2 is information indicating a list of items which can be set by manipulating the input 62. FIG. 3 shows that an operation mode of the hydraulic excavator 1 can be set (crane mode/normal mode) and a camera image to be displayed on the display unit 61 (monitor image NA, enlarged image EA) can be selected by manipulating the input 62.

The crane information D3 is displayed when the crane mode is set by manipulating the input 62. FIG. 3 shows an example displayed as the crane information D3, in which the maximum weight of a load suspendable in the crane mode (rated weight) is 3.0 tons and the actual weight of the load currently suspended is 2.8 tons.

### 2-2-2. Input

The operator can manipulate the input 62 to perform various types of sets, selections, and inputs. In the present embodiment, the input 62 consists of a plurality of mechanical button switches 62a (six button switches 62a1-62a6 are shown in FIG. 3 as an example). The operator can perform various types of settings, etc. by manipulating the input 62 (for example, by pressing down any button switch 62a).

For example, the operator can select the display/non display of the menu information D2 by pressing the button switch 62a1 located below the indication "Menu" in the menu information D2 displayed on the display unit 61. By pressing down the button switch 62a2 located below the indication "Crane" in the menu information D2, the operator can select either normal mode or crane mode as the operation mode of the hydraulic excavator 1 and drive the hydraulic excavator 1 in the selected operation mode.

Furthermore, by pressing down the button switch 62a4 located below the indication "Camera" in the menu information D2, the operator can input an instruction to change the image to be displayed on the display unit 61 between the monitor image NA and the enlarged image EA. As mentioned above, six button switches 62a are provided in the present embodiment, but a button switch 62a to input an instruction for changing the image to be displayed is only one button switch 62a4. Thus, button switch 62a4 constitutes a single image changing instruction input unit 62P among others. Namely, the hydraulic excavator 1 according to the present embodiment includes the single image changing instruction input unit 62P to accept an instruction to change the image to be displayed on the display unit 61 between the monitor image NA and the enlarged image EA. The image changing instruction input unit 62P is the button switch 62a4.

In FIG. 3, no function at pressed down is illustrated to button switches 62a3, 62a5, and 62a6, but any function may be set as appropriate.

The input 62 may consist of a touch panel input device, which is arranged to be superimposed on the display unit 61, or a jog dial. In the former, by causing the display unit 61 to display a button icon at the position corresponding to button switch 62a and configuring to detect the operator's pressing position with the touch panel input device, the operator can perform various types of settings, selections, and inputs. In the latter, by rotating the j og dial to select the desired item of the menu information D2 and pressing the center of the jog dial, the operator can input an instruction for the item.

In the present embodiment, the input 62 (in particular, the image changing instruction input unit 62P) is provided on the monitor 60, but it may be provided independently of the monitor 60.

### 2-2-3. Display Control Unit

The display control unit 63 shown in FIG. 2 controls the operation of various parts of the monitor 60. Such the display control unit 63 consists of an electronic control unit referred as to an ECU (Electronic Control Unit). As in the present embodiment, if a display control unit 63 is built in the monitor 60, the display control unit 63 can also be referred to as a monitor ECU. The display control unit 63 may be located on the outside of the monitor 60 (independently of the monitor 60). For example, a total controller 91 of the controller 100, which is described below, may be configured to also serve as the display control unit 63.

In the present embodiment, the display control unit 63 controls the display unit 61 so as to cause the display unit 61 to display only either the monitor image NA or the enlarged image EA based on the input instruction at the button switch 62a4, that is, the image changing instruction input unit 62P. Namely, the hydraulic excavator 1 includes the display control unit 63 to cause the display unit 61 to display either the monitor image NA or the enlarged image EA based on the instruction received at the single image changing instruction input unit 62P. A changing control of the image to be displayed by the display control unit 63 is described below in detail.

### 2-3. Alarm Device

The alarm device 70 outputs an alarm based on the monitoring results of the monitoring unit 50. Such the alarm device 70 consists of a rotary lamp (e.g., rotating lamp), a light emitter (e.g., light emitting diode), and a sounding unit (e.g., buzzer). For example, when the image recognition unit 53 of the monitoring unit 50 detects an obstacle by performing an image recognition, the rotary lamp rotates, the light emitter lights or blinks, and the sounding unit outputs sound. This allows the operator to know that the monitoring unit 50 detects an obstacle.

### 2-4. Operation State Detection Unit

The operation state detection unit 80 detects the operation state of the hydraulic excavator 1. In the present embodiment, the amount of residual fuel of the hydraulic excavator 1 is considered as an operation state of the hydraulic excavator 1, for example. In this case, the operation state detection unit 80 consists of a fuel detection sensor to detect the amount of residual fuel of the hydraulic excavator 1. As the operation state, the operating duration time of the hydraulic excavator 1 or the remaining capacity of the battery may be considered. The operating duration time of the hydraulic excavator 1 can be detected by a clocking unit (timer) of being the operation state detection unit 80. The remaining capacity of the battery can be detected by a battery capacity detection sensor of being the operation state detection unit 80. In this way, the hydraulic excavator 1 includes an operation state detection unit 80 to detect the operation state of the hydraulic excavator 1.

### 2-5. Controller

The controller 90 consists of an ECU or CPU. The controller 90 has a total controller 91 and an abnormality determination unit 92. The total controller 91 controls operation of each part of the hydraulic excavator 1. The abnormality determination unit 92 determines whether or not there is an abnormality in the hydraulic excavator 1 based on the operation state of the hydraulic excavator 1 detected by the operation state detection unit 80. For example, if the operation state detection unit 80 detects that the amount of residual fuel is more than a predetermined level, the abnormality determination unit 92 determines that there is no abnormality in the hydraulic excavator 1, while if the operation state detection unit 80 detects that the amount of residual fuel is less than the predetermined level, the abnormality determination unit 92 determines that there is an abnormality in the hydraulic excavator 1. In this way, the hydraulic excavator 1 includes the abnormality determination unit 92 to determine whether or not there is an abnormality in the hydraulic excavator 1 based on the operation state mentioned above.

The controller 90 may include a storage unit. The storage unit stores a program and various information to cause the controller 90 to execute. A RAM (Random Access Memory), a ROM (Read Only Memory), nonvolatile memory, etc. can be used as the storage unit.

### 3. Change of Image to be Displayed

Next, a changing control of the image to be displayed on the display unit 61 by the display control unit 63 will be explained in detail.

In the present embodiment, six display modes, the first to sixth display mode M1 to M6, are set as the display mode for images on the display unit 61. The first display mode M1, second display mode M2 and third display mode M3 are display modes for the monitor image NA. The fourth display mode M4, fifth display mode M5 and sixth display mode M6 are display modes for the enlarged image EA.

FIG. 4 shows an example of the display screen of the display unit 61 in the first display mode M1. The first display mode M1 is a display mode in which the left side image NL and the right side image NR are displayed as the monitor image NA. If the first display mode M1 is set by the image changing instruction input unit 62P (button switch 62a4), the display control unit 61 causes the display unit 61 to display the left side image NL and right side image NR in addition to the operation state information D 1, menu information D2 and crane information D3. When the operation mode of the hydraulic excavator 1 is not set to crane mode, the crane information D3 may be non-display (same below).

FIG. 5 shows an example of the display screen of the display unit 61 in the second display mode M2. The second display mode M2 is a display mode in which the left side image NL, right side image NR and rear side image NB are displayed as the monitor image NA. If the second display mode M2 is set by the button switch 62a4, the display control unit 61 causes the display unit 61 to display the left side image NL, right side image NR and rear side image NB in addition to the operation state information D1, menu information D2 and crane information D3.

FIG. 6 shows an example of the display screen of the display unit 61 in the third display mode M3. The third display mode M3 is a display mode in which the overhead image NP is displayed as the monitor image NA. If the third display mode M3 is set by the button switch 62a4, the display control unit 61 causes the display unit 61 to display the overhead image NP in addition to the operation state information D1, menu information D2 and crane information D3.

FIG. 7 shows an example of the display screen of display unit 61 in the fourth display mode M4. The fourth display mode M4 is a display mode in which the enlarged left side image EL and enlarged right side image ER are displayed as the enlarged image EA. If the fourth display mode M4 is set by the button switch 62a4, the display control unit 61 causes the display unit 61 to display the enlarged left side image EL and enlarged right side image ER.

FIG. 8 shows an example of the display screen of the display unit 61 in the fifth display mode M5. The fifth display mode M5 is a display mode in which the enlarged left side image EL, enlarged right side image ER and enlarged rear side image EB are displayed as the enlarged image EA. If the fifth display mode M5 is set by the button switch 62a4, the display control unit 61 causes the display unit 61 to display the enlarged left side image EL, enlarged right side image ER and enlarged rear side image EB.

FIG. 9 shows an example of the display screen of the display unit 61 in the sixth display mode M6. The sixth display mode M6 is a display mode in which the enlarged overhead image EP is displayed as the enlarged image EA. If the sixth display mode M6 is set by the button switch 62a4, the display control unit 61 causes the display unit 61 to display the enlarged overhead image EP.

In the fourth to sixth display mode M4 to M6, the operation state information D1, menu information D2 and crane information D3, which were displayed in the first to third display mode M1 to M3, become non-display. The reason for that will be described later.

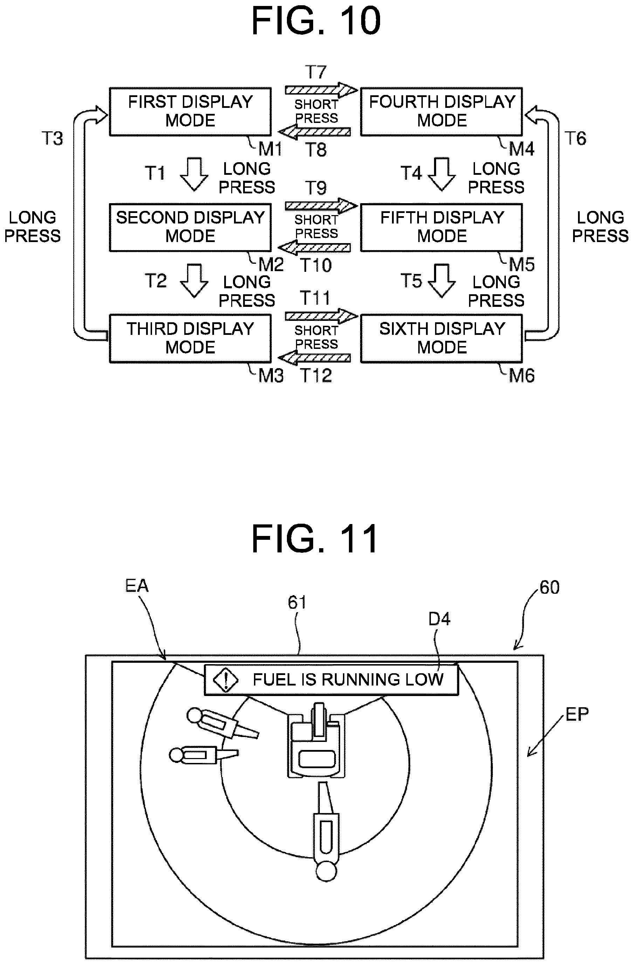

FIG. 10 schematically illustrates the transition of the display mode of the image to be displayed on the display unit 61 when through the button switch 62a4 an instruction to change the image to be displayed is accepted. In the present embodiment, the display control unit 63 causes the display unit 61 to display the monitor image NA or the enlarged image EA in the display mode selected according to a pressed down state of the button switch 62a4, specifically a pressed down time period, among the multiple display modes (first display mode M1 to sixth display mode M6) described above. This point is explained in more detail below.

Here, when the operator presses down the button switch 62a4 for not less than a predetermined time period (e.g., 2 seconds or longer), it is referred to as a "long press". When the operator presses down the button switch 62a4 for less than the predetermined time (e.g., shorter than 2 seconds), it is referred to as a "short press".

### 3-1. Long Press Case

If the operator presses down the button switch 62a4 in a long press manner, the display mode of the display unit 61 are changed and transited among the multiple display modes for displaying the monitor image NA.

For example, when the current display mode is set to the first display mode M1, if the operator presses down the button switch 62a4 in a long press manner, the display mode is transited from the first display mode M1 to the second display mode M2 (transition T1). As a result, the display screen of the display unit 61 is changed from the screen shown in FIG. 4 to the screen shown in FIG. 5. Namely, the display control unit 63 causes the display unit 61 to display the left side image NL, right side image NR and rear side image NB as the monitor image NA.

If the operator continues to press down the button switch 62a4 in a long press manner, the display mode is transited from the second display mode M2 to the third display mode M3 (transition T2). As a result, the display screen of the display unit 61 is changed from the screen shown in FIG. 5 to the screen shown in FIG. 6. Namely, the display control unit 63 causes the display unit 61 to display the overhead image NP as the monitor image NA.

If the operator further presses down the button switch 62a4 in a long press manner, the display mode is transited from the third display mode M3 to the first display mode M1 (transition T3). As a result, the display screen of the display unit 61 is changed from the screen shown in FIG. 6 to the screen shown in FIG. 4. Namely, the display control unit 63 causes the display unit 61 to display the left side image NL and the right side image NR as the monitor image NA.

On the other hand, for example, when the current display mode is set to the fourth display mode M4, if the operator presses down the button switch 62a4 in a long press manner, the display mode is transited from the fourth display mode M4 to the fifth display mode M5 (transition T4). As a result, the display screen of the display unit 61 is changed from the screen shown in FIG. 7 to the screen shown in FIG. 8. Namely, the display control unit 63 causes the display unit 61 to display the enlarged left side image EL, enlarged right side image ER and enlarged rear side image EB as the enlarged image EA.

If the operator continues to press down the button switch 62a4 in a long press manner, the display mode is transited from the fifth display mode M5 to the sixth display mode M6 (transition T5). As a result, the display screen on the display unit 61 is changed from the screen shown in FIG. 8 to the screen shown in FIG. 9. Namely, the display control unit 63 causes the display unit 61 to display the enlarged overhead image EP as the enlarged image EA.

If the operator further presses down the button switch 62a4 in a long press manner, the display mode is transited from the sixth display mode M6 to the fourth display mode M4 (transition T6). As a result, the display screen of the display unit 61 is changed from the screen shown in FIG. 9 to the screen shown in FIG. 7. Namely, the display control unit 63 causes the display unit 61 to display the enlarged left side image EL and the enlarged right side image ER as the enlarged image EA.

### 3-2. Short Press Case

If the operator presses down the button switch 62a4 in a short press manner, the display mode of the display unit 61 is changed and transited between a display mode for displaying the monitor image NA and a display mode for displaying the monitor image EA.

For example, when the current display mode is set to the first display mode M1, if the operator presses down the button switch 62a4 in a short press manner, the display mode is transited from the first display mode M1 to the fourth display mode M4 (transition T7). As a result, the display screen of the display unit 61 is changed from the screen shown in FIG. 4 to the screen shown in FIG. 7. Namely, the display control unit 63 causes the display unit 61 to display the enlarged left side image EL and the enlarged right side image ER as the enlarged image EA.

If the operator continues to press down the button switch 62a4 in a short press manner, the display mode is transited from the fourth display mode M4 to the first display mode M1 (transition T8). As a result, the display screen of the display unit 61 is changed from the screen shown in FIG. 7 to the screen shown in FIG. 4. Namely, the display control unit 63 causes the display unit 61 to display the left side image NL and the right side image NR as the monitor image NA.

When the current display mode is set to the second display mode M2, if the operator presses down the button switch 62a4 in a short press manner, the display mode is transited from the second display mode M2 to the fifth display mode M5 (transition T9). As a result, the display screen of the display unit 61 is changed from the screen shown in FIG. 5 to the screen shown in FIG. 8. Namely, the display control unit 63 causes the display unit 61 to display the enlarged left side image EL, enlarged right side image ER and enlarged rear side image EB as the enlarged image EA.

If the operator continues to press down the button switch 62a4 in a short press manner, the display mode is transited from the fifth display mode M5 to the second display mode M2 (transition T10). As a result, the display screen of the display unit 61 is changed from the screen shown in FIG. 8 to the screen shown in FIG. 5. Namely, the display control unit 63 causes the display unit 61 to display the left side image NL, right side image NR and rear side image NB as the monitor image NA.

When the current display mode is set to the third display mode M3, if the operator presses down the button switch 62a4 in a short press manner, the display mode is transited from the third display mode M3 to the sixth display mode M6 (transition T11). As a result, the display screen of the display unit 61 is changed from the screen shown in FIG. 6 to the screen shown in FIG. 9. Namely, the display control unit 63 causes the display unit 61 to display the enlarged overhead image EP as the enlarged image EA.

If the operator continues to press down the button switch 62a4 in a short press manner, the display mode is transited from the sixth display mode M6 to the third display mode M3 (transition T12). As a result, the display screen of the display unit 61 is changed from the screen shown in FIG. 9 to the screen shown in FIG. 6. Namely, the display control unit 63 causes the display unit 61 to display the overhead image NP as the monitor image NA.

The display mode changing control in the case where the operator presses down the button switch 62a4 in a long press manner and that in the case where the operator presses down it in a short press manner may be switched to each other. Namely, if the operator presses down the button switch 62a4 in a short press manner, the display mode of the display unit 61 may be changed among the first to third display mode M1 to M3, or be changed among the fourth to sixth display mode M4 to M6. On the other hand, if the operator presses down the button switch 62a4 in a long press manner, the display mode of the display unit 61 may be changed between the first display mode M1 and the fourth display mode M4, between the second display mode M2 and the fifth display mode M5, or between the third display mode M3 and the sixth display mode M6.

By combining the long press and the short press on the button switch 62a4, the operator can change the display mode from any display mode (e.g., the first display mode M1) to any display mode (e.g., the sixth display mode).

### 4. Effect

The hydraulic excavator 1 according to the present embodiment includes a single image changing instruction input unit 62P (button switch 62a4) as the input to accept a changing instruction for the image to be displayed on the display unit 61. This allows the operator to give a system the instruction for changing the image to be displayed by manipulating the single image changing instruction input unit 62P. Therefore, the operator has no longer concern or confusion of manipulation to give a system an instruction for changing the image to be displayed, which the operator has suffered from in the conventional system having multiple button switches to give a system an instruction for changing the image to be displayed. Thus, operators can perform easy and intuitive operations to easily give the system an instruction for changing the image to be displayed. In other words, the operator's operability when performing manipulation for changing the image to be displayed can be improved.

The display control unit 63 causes the display unit 61 to display the monitor image NA or the enlarged image EA according to the pressed down state of the button switch 62a4 of being the single image changing instruction input unit 62P. Thus, the operator can easily give the system the instruction to change the image to be displayed on the display unit 61 between the monitor image NA and the enlarged image EA by changing the pressed down state of the single button switch 62a4.

In particular, the display control unit 63 causes the display unit 61 to display the monitor image NA or the enlarged image EA according to the pressed down time period of the button switch 62a4. Namely, the pressed down state includes the pressed down time period of the button switch 62a4. The operator can easily adjust the pressed down time period of the button switch 62a4 by pressing down the single button switch 62a4 in a long press or short press manner, for example. Thus, the operator can give the system the instruction to change the image to be displayed by a simple manipulation such as pressing down the button switch 62a4 in a long press or short press manner.

In the present embodiment, the display control unit 63 changes the image to be displayed on the display unit 61 between the monitor image NA and the enlarged image EA when the operator presses down the button switch 62a4 in a short press manner, for example when the pressed down time period of the button switch 62a4 is less than 2 seconds (transitions T7 to T12). On the other hand, the display control unit 63 causes the display unit to display the monitor image NA or the enlarged image EA in one display mode of the several display modes when the operator presses down the button switch 62a4 in a long press manner, for example when the pressed down time period of the button switch 62a4 is not less than 2 seconds (transitions T1 to T3 or transitions T4 to T6). As described above, the display control of the display control unit 63 in case of pressing down the button switch 62a4 in a long press manner and in case of pressing down it in a short press manner may be switched to each other.

Namely, the display control unit 63 changes the image to be displayed on the display unit 61 between the monitor image NA and the enlarged image EA when the pressed down time period of the button switch 62a4 is one of less than and not less than the predetermined time, while the display control unit 63 causes the display unit 61 to display the monitor image NA or the enlarged image EA in one display mode of the multiple display modes when the pressed down time period is the other of less than and not less than the predetermined time.

In this example, according to the pressed down time period of the single button switch 62a4, the operator can distinguish between an instruction to change the image to be displayed between the monitor image NA and the enlarged image EA and an instruction to change the display mode of the monitor image NA or the display mode of the enlarged image EA.

The multiple display modes include the first display mode M1 for displaying the left side image NL and the right side image NR, and the second display mode M2 for displaying all of the left side image NL, right side image NR and rear side image NB. In this example, by pressing down the single button switch 62a4, the operator can select the first display mode M1 or the second display mode M2 as the display mode of the monitor image NA and give the system an instruction to cause the display unit 61 to display the monitor image NA in the selected display mode.

The multiple display modes include the third display mode M3 for displaying the overhead image NP. In this example, by pressing down the single button switch 62a4, the operator can select the first display mode M1, second display mode M2, or third display mode M3 as the display mode of the monitor image NA and give the system an instruction to cause the display unit 61 to display the monitor image NA in the selected display mode.

The multiple display modes include the fourth display mode M4 for displaying the enlarged left-side image EL and the enlarged right side image ER, and the fifth display mode M5 for displaying the enlarged left-side image EL, enlarged right side image ER and enlarged rear side image EB. In this example, by pressing the single button switch 62a4, the operator can select the fourth display mode M4 or fifth display mode M5 as the display mode of the enlarged image EA and give the system an instruction to cause the display unit 61 to display the enlarged image EA in the selected display mode.

The multiple display modes include the sixth display mode M6 for displaying the enlarged overhead image EP. In this example, by pressing the single button switch 62a4, the operator can select the fourth display mode M4, fifth display mode M5, or sixth display mode M6 as the display mode of the enlarged image EA and give the system an instruction to cause the display unit 61 to display the enlarged image EA in the selected display mode.

In the present embodiment, the display control unit 63 causes the display unit 61 to display the operation state information D1 (e.g., residual fuel level information) together with the monitor image NA in the first display mode M1 to the third display mode M3 for displaying the monitor image NA on the display unit 61 (see FIGS. 4 to 6). On the other hand, the display control unit 63 causes the display unit 61 to display the enlarged image EA with the operation state information D1 being non-displayed in the fourth display mode M4 to the sixth display mode M6 for displaying the enlarged image EA on the display unit 61 (see FIGS. 7 to 9). Namely, when the display unit 61 displays the monitor image NA, the display control unit 63 also causes the display unit 61 to display the information indicating the operation state, while when the display unit 61 displays the enlarged image EA, the display control unit 63 causes the display unit 61 to display the enlarged image EA with the information indicating the operation state being deleted.

When the monitor image NA is displayed on the display unit 61, the operation state information D1 is also displayed, so that the operator can know the operation status (e.g. remaining fuel level) of the hydraulic excavator 1 while checking the monitor image NA. On the other hand, when the enlarged image EA is displayed in the display unit 61, the operation state information D1 is deleted, so that the area where the operation state information D1 was displayed can be used as the display area for the enlarged image EA. This ensures that the enlarged image EA can be displayed within the limited display screen of the display unit 61.

### 6. Display of Other Information

FIG. 11 shows a display screen of the display unit 61 displaying abnormality information D4. In a configuration according to the present embodiment where the hydraulic excavator 1 is provided with an abnormality determination unit 92 (see FIG. 2), when the abnormality determination unit 92 determines that the hydraulic excavator 1 is abnormal, the display control unit 63 may cause the display unit 61 to display abnormality information D4. As shown in FIG. 11, when the operation state detection unit 80 (see FIG. 2) detects that fuel is running low, the abnormality determination unit 92 determines that the hydraulic excavator 1 is abnormal, and based on the determination the display control unit 63 causes the display unit 61 to display the abnormality information D4 through which the operator is notified that fuel is running low by control thereof.

In this way, the display control unit 63 causes the display unit 61 to display information indicating an abnormality (abnormality information D4) when the abnormality determination unit 92 determines that hydraulic excavator 1 is an abnormal. In such an event, the operator can know the abnormality based on the abnormality information D4 displayed on the display unit 61 and take the necessary action immediately. For example, as mentioned above when the display unit 61 displays as abnormality information D4 that fuel is running low, the operator can immediately take measures such as refilling fuel, etc.

In particular, even if the display mode for displaying the enlarged image EA on the display unit 61 is selected, that is, the display mode in which the operation state information D1 is not displayed on the display unit 61 (fourth display mode M4 to sixth display mode M6) is selected, the display control unit 63 causes the display unit 61 to display the abnormality information D4 by control thereof. This allows the operator to see the abnormality information D4 and know the abnormality at abnormal condition even while the display unit 61 is displaying the enlarged image EA, so that the operator can take appropriate measures.

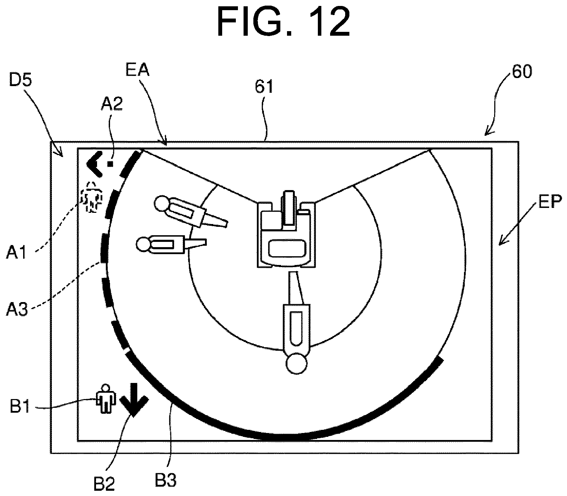

FIG. 12 shows a display screen of the display unit 61 displaying warning information D5. In a configuration according to the present embodiment where the hydraulic excavator 1 is provided with the image recognition unit 53 to detect by means of image recognition whether or not an obstacle is present around there, the display control unit may cause the display unit 61 to display warning information D5 indicating that the obstacle is present when the image recognition unit 53 detects the obstacle.

In the example of FIG. 12, the display unit 61 displays as the warning information D5 an icon A1 indicating a "human" of being an obstacle, an arrow icon A2 indicating a direction in which the human is present, and an arc strip-shape area A3 (see thick dashed line) indicating that the human is on the left side of the hydraulic excavator 1. Furthermore, the display unit 61 also displays as warning information D5 an icon B1 indicating a "human" of being an obstacle, an arrow icon B2 indicating a direction in which the human is present, and an arc strip-shape area B3 (see thick solid line) indicating that the human is behind the hydraulic excavator 1.

In this way, the display control unit 63 causes the display unit 61 to display the warning information D5 when the image recognition unit 53 detects the obstacle (around the hydraulic excavator 1). In the event, based on the warning information D5 displayed on the display unit 61, the operator can know that the obstacles is present in a monitoring area of the hydraulic excavator 1 (e.g., a range of less than 2 or 3m radius from the hydraulic excavator 1), check an area around there, and take appropriate measures as necessary. For example, the operator can warn the human who invades into the monitoring area to leave the monitoring area. The operator can give the human warning by a voice or sounding.

### 7. Supplemental Description

In the present embodiment, the pressed down time period is exemplarily explained as the pressed down state of the image changing instruction input unit 62P (button switch 62a4), and the example in which the display mode is changed according to the pressed down time period is described, but the display mode may be changed according to the number of times the switch is pressed down per unit time. For example, when the operator presses down the image changing instruction input unit 62P in a single-press (one-click) manner, the display control unit 63 may change the display mode of the display unit 61 between the first display mode M1 and the fourth display mode M4, between the second display mode M2 and the fifth display mode M5, and between the third display mode M3 and the sixth display mode M6, and cause the display unit 61 to display the monitor image NA or the enlarged image EA. In addition, when the operator presses down the image changing instruction input unit 62P in a twice-press (double-click) manner, the display control unit 63 may change the display mode of the display unit 61 among the first display mode M1, second display mode M2 and third display mode M3, or among the fourth display mode M4, fifth display mode M5 and sixth display mode M6, and cause the display unit 61 to display the monitor image NA or the enlarged image EA.

In the present embodiment, the hydraulic excavator 1 which is the construction machine is described as an example of the work vehicle, but the work vehicle is not limited to the hydraulic excavator, and may be any other construction machine such as wheel loader, or an agricultural machine such as combine harvester. Namely, the display method of the display unit 61 described in the present embodiment can be applied to any construction equipment and agricultural machinery other than the hydraulic excavator 1.

The embodiment of the present invention has been described above, but the scope of the invention is not limited thereto. The invention can be carried out within an extended or modified range without departing from the gist of the invention.

### INDUSTRIAL APPLICABILITY

The present invention is applicable to a work vehicle such as a construction machine and an agricultural machine, for example.

### DESCRIPTION OF REFERENCE NUMERALS

1 Hydraulic excavator (work vehicle)
51 Monitor Image obtaining unit
52 Enlarged image generation unit
53 Image recognition unit
54a Left camera
54b Right camera
54c Rear camera
55 Overhead image generation unit
61: Display unit
62a4 Button switch (image changing instruction input unit)
62P Image changing instruction input unit
63: Display control unit
80 Operation state detection unit
92 Abnormality determination unit
NA Monitor image
NL Left side Image
NR Right side image
NB Rear side image
NP Overhead image
EA Enlarged Image
EL Enlarged left side image
ER Enlarged right side image
EB Enlarged rear side image
EP Enlarged overhead image
M1 First display mode
M2 Second display mode
M3 Third display mode
M4 Fourth display mode
M5 Fifth display mode
M6 Sixth display mode
D4 Abnormality information
D5 Warning information

## Claims

1. A work vehicle comprising:
a monitor image obtaining unit to obtain an image around the work vehicle as a monitor image;
an enlarged image generation unit to enlarge the monitor image to generate an enlarged image;
a display unit to display the monitor image or the enlarged image;
a single image changing instruction input unit to receive an instruction to change an image to be displayed on the display unit between the monitor image and the enlarged image; and
a display control unit to cause the display unit to display the monitor image or the enlarged image based on the instruction received at the single image changing instruction input unit.

2. The work vehicle according to claim 1, wherein
the image changing instruction input unit is a button switch, and
the display control unit causes the display unit to display the monitor image or the enlarged image according to a pressed down state of the button switch.

3. The work vehicle according to claim 2, wherein the pressed down state includes a pressed down time period of the button switch.

4. The work vehicle according to claim 3, wherein when the pressed down time period is one of less than a predetermined time period and more than the predetermined time period, the display control unit changes the image to be displayed between the monitor image and the enlarged image, while when the pressed down time period is the other of less than the predetermined time period and more than the predetermined time period, the display control unit causes the monitor image or the enlarged image to be displayed in one of a plurality of display modes.

5. The work vehicle according to claim 4, wherein
the monitor image obtaining unit includes a left camera, a right camera and a rear camera that capture images of a left side, a right side and a rear side of the work vehicle, respectively,
the monitor image includes a left side image captured by the left camera and obtained, a right side image captured by the right camera and obtained, and a rear side image captured by the rear camera and obtained, and
the plurality of display modes includes:
a first display mode for displaying the left side image and the right side image; and
a second display mode for displaying all the left side image, the right side image and the rear side image.

6. The work vehicle according to claim 5, wherein,
the monitor image obtaining unit further includes an overhead image generation unit to compose the left side image, the right side image, and the rear side image to generate an overhead image,
the monitor image includes the overhead image, and
the plurality of display modes includes a third display mode for displaying the overhead image.

7. The work vehicle according to claim 6, wherein,
the enlarged image includes an enlarged left side image, an enlarged right side image, and an enlarged rear side image that are obtained by enlarging the left side image, the right side image, and the rear side image, respectively, and
the plurality of display modes includes:
a fourth display mode for displaying the enlarged left side image and the enlarged right side image; and
a fifth display mode for displaying the enlarged left side image, the enlarged right side image, and the enlarged rear side image.

8. The work vehicle according to claim 7, wherein,
the enlarged image generation unit enlarges the overhead image that is generated by the overhead image generation unit to generate an enlarged overhead image,
the enlarged image includes the enlarged overhead image, and
the plurality of display modes includes a sixth display mode for displaying the enlarged overhead image.

9. The work vehicle according to any one of claims 1 to 8 further comprising an operation state detection unit to detect an operation state of the work vehicle,
wherein when the display unit displays the monitor image, the display control unit causes the display unit to display information indicating the operation state together with the monitor image, while when the display unit displays the enlarged image, the display control unit causes the display unit to display the enlarged image with information indicating the operation state being deleted.

10. The work vehicle according to any one of claims 1 to 9 further comprising an abnormality determination unit to determine whether or not the work vehicle has an abnormality based on the operation state,
wherein when the abnormality determination unit determines that the work vehicle has an abnormality, the display control unit causes the display unit to display information indicating the abnormality.

11. The work vehicle according to any one of claims 1 to 10 further comprising an image recognition unit to perform image recognition processing on the monitor image to detect whether or not an obstacle is present around the work vehicle,
wherein when the obstacle is detected by the image recognition unit, the display control unit causes the display unit to display warning information.
